# EUROPEAN PATENT APPLICATION

(11) **EP 4 797 240 A1**
(43) Date of publication of application: **26.08.2026**
(21) Application number: 26154122.1
(22) Date of filing: 26.01.2026
(51) Int. Cl.: G08G 5/21, G06V 20/17, G06V 20/56, G06V 20/58, G08G 5/22, G08G 5/26, G08G 5/265, G08G 5/51, G08G 5/55, G08G 5/58, G08G 5/72

(54) **SYSTEM AND METHOD FOR AIR TRAFFIC CONTROL COMPLIANCE MONITORING**

(30) Priority: 20.02.2025 US 202519059046
(71) Applicant: Honeywell International Inc., Charlotte, NC 28202 (US)
(72) Inventor: LIU, Yufeng, Charlotte, 28202 (US); CHEN, Zhong, Charlotte, 28202 (US)
(74) Representative: Haseltine Lake Kempner LLP

(57) **Abstract**

A system comprises a controller onboard a vehicle, and including a processor and memory. Onboard optical sensors communicate with the processor, and include look-forward and look-down optical sensors. An onboard bidirectional radio communicates with the processor and receives ATC clearance information. The processor hosts data processing modules comprising an ATC clearance processing module that receives the clearance information from the radio; an image processing module that receives image data from the optical sensors, the image processing module configured to provide object detection and image interpretation functions; a noncompliance determination module in communication with the image processing module, and operative to produce an alert signal upon determining a noncompliance event; and an alert generation module that receives the alert signal from the noncompliance determination module, the alert generation module configured to output a visual or audio alert. A database stores translated clearances, and communicates with the noncompliance determination module.

## Description

### BACKGROUND

**In** the complex and dynamic environment of air traffic management, precise communication and adherence to instructions are paramount. When pilots do not follow Air Traffic Control (ATC) instructions, it can lead to near-collision incidents or even catastrophic accidents, jeopardizing the safety of passengers, crew, and aircraft.

Thus, there is a need for improved ATC compliance monitoring systems to aid in avoiding the potential dangers of non-compliance with ATC instructions.

### SUMMARY

A system comprises at least one controller onboard a vehicle, the at least one controller including a processor, and a memory in operative communication with the processor. A set of optical sensors onboard the vehicle are in operative communication with the processor, the optical sensors including at least one look-forward optical sensor and at least one look-down optical sensor. At least one bidirectional communication radio is onboard the vehicle and in operative communication with the processor, the at least one bidirectional communication radio operative to receive air traffic control (ATC) clearance information. The processor hosts a plurality of data processing modules comprising: an ATC clearance processing module operative to receive the ATC clearance information from the at least one bidirectional communication radio, the ATC clearance processing module operative to translate the ATC clearance information into processor readable information; an image processing module operative to receive image data from the optical sensors, the image processing module configured to provide an object detection function and an image interpretation function; a noncompliance determination module in operative communication with the image processing module, the noncompliance determination module operative to produce an alert signal upon determining a noncompliance event; and an alert generation module configured to receive the alert signal from the noncompliance determination module, the alert generation module configured to output a visual alert or an audio alert. The memory includes a database operative to store the translated ATC clearance information as commands, the database in operative communication with the noncompliance determination module.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a system for ATC compliance monitoring, according to one embodiment;
Figure 2 is a block diagram of an exemplary software architecture for use in the system of Figure 1;
Figure 3 is a flow diagram of a method for ATC compliance monitoring, according to one implementation;
Figure 4 is a block diagram of a clearance process as performed by an ATC clearance processing module, according to one implementation;
Figure 5 illustrates an example of typical runway markings at an airport;
Figure 6 depicts an example of runway holding position markings on a taxiway at an airport;
Figure 7 is a schematic diagram of an example aircraft scenario for an aircraft with a look-down camera;
Figure 8 is a schematic diagram of an example aircraft scenario for an aircraft with a look-forward camera at a tilt down angle; and
Figure 9 is a schematic diagram of an example conditional clearance scenario, in which an Unmanned Aircraft Systems (UAS) vehicle is to hold in front of a taxiway.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A system and method for ATC compliance monitoring of vehicles at airports is described herein.

The present approach generally provides a methodology to interpret ATC commands using large language models, use a downward camera to interpret airport surface markings, use a forward looking camera with articulation to interpret a forward space of the camera, and to combine this information to generate an aircraft action for safe airport terminal surface operations. The present system and method are applicable to various types of vehicles, such as crewed aircraft, uncrewed aircraft, or ground vehicles that operate on airport surfaces.

The present system and method provide for ensuring the safety, efficiency, and reliability of air traffic operations. By preventing deviations from ATC instructions, the system and method protect lives, maintain regulatory standards, and promote a more orderly and efficient aviation environment.

In the present approach, a series of artificial intelligence (AI) methods can be used to perceive the local airport environment in the vicinity of an ownship aircraft, to integrate this with an understanding of ATC communications and operational rules, and to alert a flight crew in case noncompliance of an ATC clearance has occurred. This approach can use active detection sensors such as cameras to eliminate radio signal interference, such as Global Positioning System (GPS) interference. In addition, this approach can be used for both crewed aircraft and uncrewed aircraft operations to provide a more robust solution to enhance safety.

The present ATC compliance monitoring system provides for enhanced safety of aviation operations, accident prevention, and situational awareness. By monitoring compliance, potential deviations can be identified and addressed promptly, preventing dangerous situations before they escalate. The non-compliance with ATC instructions can lead to severe consequences. The compliance monitoring system can help in reducing the risk of such occurrences by ensuring that pilots adhere strictly to ATC directives. In addition, for both ATC controllers and pilots, maintaining high situational awareness is crucial. The compliance monitoring system provides real-time feedback, helping both parties stay aware of any deviations and rectify them immediately.

Further, the ATC compliance monitoring system provides for regulatory compliance, and efficiency in air traffic management. Aviation authorities mandate strict adherence to ATC instructions. The compliance monitoring system ensures that all regulations are followed, thereby avoiding legal and regulatory repercussions for airlines and crew. Non-compliance can lead to inefficiencies, such as flight delays, increased fuel consumption, and airspace congestion. By ensuring compliance, the compliance monitoring system contributes to more efficient and smooth air traffic management.

Further details of various embodiments are described hereafter and with reference to the drawings.

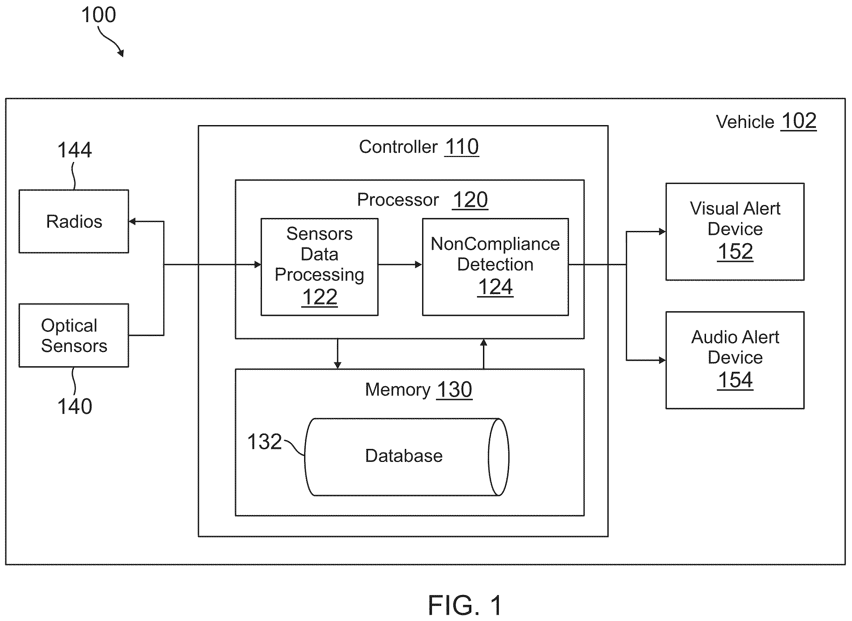

Figure 1 is a block diagram of a system 100 for ATC compliance monitoring for a vehicle 102, according to one embodiment. The system 100 comprises at least one controller 110 onboard the vehicle 102, with the controller 110 including a processor 120, and a memory unit 130 for storing a database 132, in operative communication with the processor 120. The processor 120 hosts several software modules, including a sensors data processing module 122, and a noncompliance detection module 124. The sensors data processing module 122 can include at least two software data processing modules, such as an ATC clearance processing module and an image data processing module.

Various processing results, such as ATC commands derived from the sensors data processing module 122, can be stored in the database 132. In addition, some operational rules for system 100 can be stored in the database 132. The vehicle 102 can be a crewed aircraft or an uncrewed aircraft.

A set of optical sensors 140 onboard the vehicle 102 are in operative communication with the processor 120. The optical sensors 140 are operative to capture images of the airport environment, and provide corresponding image data to the processor 120 for use in the sensors data processing module 122. As described further hereafter, the optical sensors 140 include at least one look-forward optical sensor and at least one look-down optical sensor. The optical sensors 140 can be visual light cameras, infrared cameras, or the like, which can be controlled to adjust a tilt angle.

One or more radios 144, such as a bidirectional communication radio, is onboard vehicle 102 and operative to receive ATC clearance information. The radios 144 are in operative communication with the processor 120 and are configured to provide the ATC clearance information as input data for the sensors data processing module 122. The radios 144 can include a very high frequency (VHF) radio, a high frequency (HF) radio, a satellite communications (SATCOM) unit, or a radio using other terrestrial technology such as a 4G radio or a 5G radio. The radios 144 can transmit response messages, generated by vehicle 102, back to an ATC center.

One or more alert devices, such as a visual alert device 152 and an audio alert device 154, are in operative communication with the noncompliance detection module 124 in the processor 120. The visual alert device 152 can be in a cockpit display unit, or on a mobile device such as a tablet or cell phone. In addition, the audio alert device 154 can be a speaker or any other audio output device.

Based on the processing results, the noncompliance detection module 124 can automatically send respective visual alert and audio alert commands to the visual alert device 152 and the audio alert device 154, upon determining any noncompliance or conflict event.

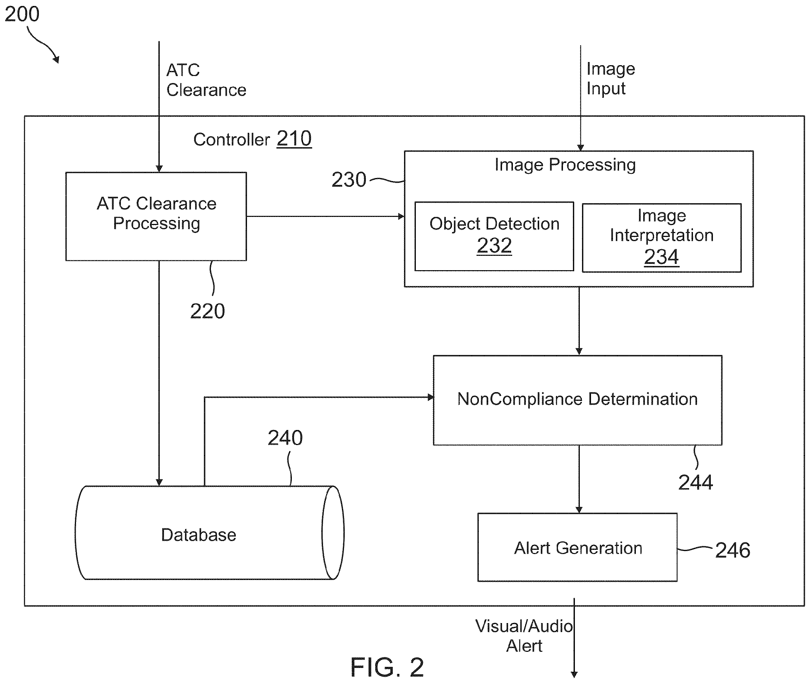

Figure 2 is a block diagram of an exemplary software architecture 200 for use in a system for ATC compliance monitoring, such as system 100 of Figure 1. The software architecture 200 generally comprises a controller 210, which includes one or more processors that host various software modules, which are described as follows.

An ATC clearance processing module 220 is operative to receive ATC clearance information, such as from a bidirectional communication radio onboard a vehicle such as an aircraft. The ATC clearance processing module 220 is operative to translate the ATC clearance information into processor readable information. For example, the ATC clearance processing module 220 can translate taxi clearance information into some computer understandable information, which can include airport elements such as taxiway, runway, and/or some conditions that must be met before the aircraft can proceed as authorized.

An image processing module 230 is operative to receive image input data from optical sensors onboard the aircraft. The image processing module 230 is configured to provide an object detection function at 232, and an image interpretation function at 234. The image processing module 230 can include software algorithms in the object detection function at 232 and the image interpretation function at 234, to process images from a look-forward camera and a look-down camera on the aircraft for object detection and interpretation. For example, these software algorithms can interpret a look-forward image to determine if a condition contained in a conditional clearance is met before the aircraft can proceed as authorized. In addition, the software algorithms can process a look-down image to recognize markings or signs painted on the surface and relative position to the markings or signs on the surface.

The controller 210 also includes a database 240 stored in a memory unit. The database 240 contains various processing results, such as ATC commands derived from the ATC clearance processing module 220. In addition, operational rules can also be stored in the database 240. A noncompliance determination module 244 is in operative communication with the image processing module 230 and the database 240. The noncompliance determination module 244 is operative to determine whether any non-compliance event has occurred based on the ATC clearance command and/or operational rules, and any aircraft maneuver. An alert generation module 246 is operative to generate visual and/or audio alert commands based on an alert signal received from the noncompliance determination module 244. The alert commands are sent to corresponding visual and/or audio alert devices to present the alerts to flight crew members.

Since each clearance includes origin and destination elements, the image processing module 230 can process images captured by the look-down camera to understand the markings or signs on the surface. To further determine if the aircraft arrives at a destination, when the aircraft arrives at the destination, the system will wait for the next ATC clearance or pick up a next incomplete clearance from the database 240 to execute.

The image processing module 230 will continue to process the image captured by the look-down camera, to further determine if there is any operational constraint for the markings based on operational rule stored in the database 240. For example, if the look-down camera detects the aircraft is approaching a hold short line, as per the operational rule, the aircraft must stop and cannot proceed until an authorization is received. In such a case, the system will search from the database 240 to check if the authorization for further proceeding has been received; if not received, the system will provide an alert to flight crew to request clearance before further proceeding. In case the ATC clearance includes a condition, which must be met before the aircraft can proceed, the system can leverage the look-forward camera to monitor if the condition is met or not. If the condition has not been met but the aircraft is moving, the system will alert the flight crew as well.

The ATC clearance processing module 220 is configured to extract, interpret, and transmit a condition to the image processing module 230. For example, an ATC clearance can be: "UAS one two three, Follow Airbus 320, right turn on taxiway November, hold short of Runway Two-Seven Left." The ATC clearance processing module 220 can interpret the semantics of this clearance as that there is an Airbus 320 aircraft taxiing on the taxiway November from left to right; after the Airbus 320 passes the intersection, the ownship aircraft (UAS one two three) can start to turn right on the taxiway November. Therefore, the condition "one Airbus 320 aircraft taxi on taxiway November from left to right and pass the intersection" can be interpreted and transmitted to the image processing module 230. The image processing module 230 will firstly process the image captured by the look-forward camera to interpret the image content. When the semantics of the look-forward image has not met the condition, but the ownship aircraft is detected as moving based on speed and position information, the system will provide an alert to the flight crew that the condition has not been met.

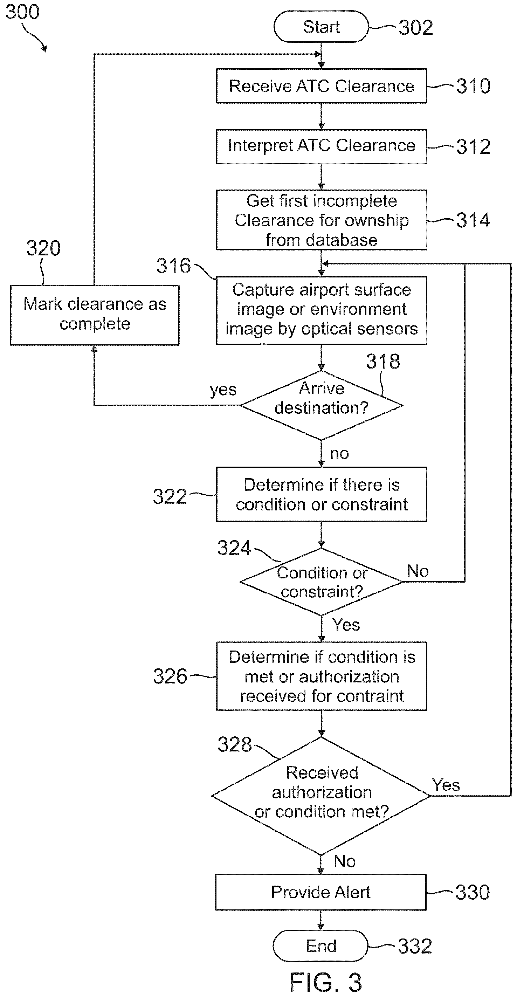

Figure 3 is a flow diagram of a method 300 for ATC compliance monitoring of a vehicle, such as an aircraft, according to one implementation, which can be executed by system 100 utilizing software architecture 200 as described above. After a start 302, the method 300 receives an ATC clearance (block 310) from an ATC controller, in either voice format or text format. The method 300 interprets the ATC clearance (block 312), such as by using the ATC clearance processing module 220, to interpret the semantics of the ATC clearance and extract key information, such as callsign, taxiway or runway information, and any condition information. The ATC clearance processing module 220 can recognize any clearance for an ownship vehicle based on the callsign information. Each clearance can be organized by key information including, but not limited to, callsign, origin, destination, segment, condition, etc. Each received clearance can be stored in an onboard clearance database and sequenced based on the issued time.

The method 300 then gets a first incomplete clearance message for the ownship vehicle from the clearance database to execute (block 314). The method 300 captures an airport surface image by a look-down optical sensor (block 316), and determines if a destination is arrived at based on the airport surface image (block 318). If the method 300 determines that the ownship vehicle has arrived at the destination at block 318, then the method 300 marks the clearance as complete (block 320), and repeats starting at block 310.

Returning to block 318, if the method 300 determines that the ownship vehicle has not arrived at the destination, then the method 300 determines if there is any operational condition or constraint included in the ATC clearance (block 322). If there is neither condition nor constraint as determined at 324, then the method 300 repeats starting at block 316. If there is a condition or constraint as determined at 324, the method 300 determines whether the condition is met or searches whether authorization for a next step from a clearance database has been received for the constraint (block 326). If the authorization is received or the condition is met at 328, then the method 300 repeats starting at block 316. If authorization is not received or the condition is not met at 328, the method 300 provides an alert (block 330), such as to a flight crew to request clearance before further proceeding. The method 300 then is at an end at 332.

Further details of various embodiments of the software modules used in the architecture of the present system are described in the following sections.

### ATC Clearance Processing

The ATC clearance processing module is operative to take an ATC controller's clearance as input to understand taxi clearances. The ATC clearance processing module can receive the ATC clearance through several different ways from a ground ATC controller. The ATC clearance can be obtained via the voice channel of a communication radio, or through a datalink channel. The ATC clearance can also be manually input by a pilot via devices such as a multi-function control and display unit (MCDU) or touch screen controller.

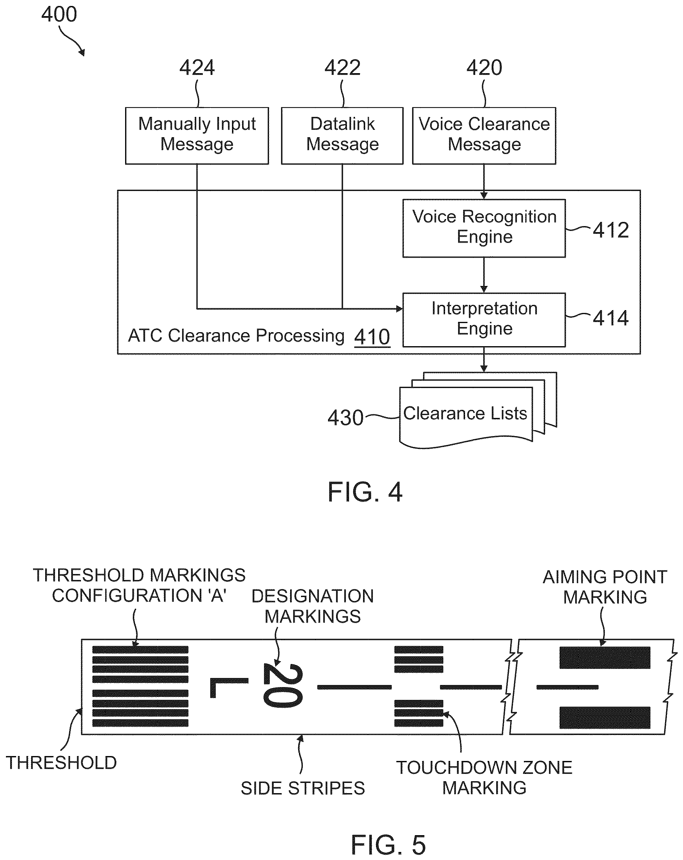

Figure 4 is a block diagram for an ATC clearance process 400 as performed by an ATC clearance processing module 410, according to one implementation. As shown, the ATC clearance processing module 410 is configured to host a voice recognition engine 412, and an interpretation engine 414 in operative communication with the voice recognition engine 412. During operation, a voice clearance message 420 can be received, via a voice channel of a communication radio, by the voice recognition engine 412; a datalink clearance message 422 can be received, through a datalink application, by the interpretation engine 414; or a manually input clearance message 424, input by a pilot via devices such as a MCDU or a touch screen controller, can be received by the interpretation engine 414. The ATC clearance processing module 410 is operative to output processed clearance information to one or more clearance lists 430 stored in a database, as shown in the Figure 4.

The voice recognition engine 412 is configured to transcript the ATC clearance message from voice into text, for example: "United Airline one two three, runway zero eight, taxi from Charlie eleven via taxiway Bravo and Bravo one". When the taxi clearance message is presented in a datalink message, there is no need to use voice recognition engine 412, and the datalink message can be directly transmitted to the interpretation engine 414 for further processing.

The interpretation engine 414 is operative to take the transcript text as input to understand the semantics of the ATC clearance by reference to the International Civil Aviation Organization (ICAO) ATC clearance phraseology and extract key information. The interpretation engine 414 can be an AI engine that employs AI processing methods including, but not limited to, natural language processing, regular expression, or the like, to understand the semantics and extract key information from the transcript text. In the above example, the key information includes: an origin point parking stand of Charlie eleven, taxiway bravo and bravo one; and the destination is runway zero eight. The "United Airline one two three" is the call sign for the ownship aircraft, and based on the call sign, the processor of the interpretation engine 414 can know whether the ATC clearance is issued for the own-ship aircraft or not.

Each classified clearance will be written into a clearance list and stored in the database. The clearance will be sequenced per issued time in the clearance list, and can include, but not limited to, callsign, clearance type, origin, destination, condition if contained, and status. One example for an ownship clearance list is shown in Table 1 as follows.

**Table 1**

| **Ownship Clearance List** | | | | | | |
|---|---|---|---|---|---|---|
| Callsign | Issued time | Type | Origin | Destination | Condition | Status |
| AXX123 | 08:20:10 | Taxi | C11 | B2 | N/A | Complete |
| AXX123 | 08:21:35 | Taxi | B2 | F3 | N/A | Complete |
| ...... | | | | | | |
| AXX123 | 08:23:42 | Taxi | F3 | RWY 08 | Follow A320 | Incomplete |

An AI method such as a natural language processing method can be trained by a large amount of real ATC clearance data to understand the semantics of ATC clearances, such as what is the taxi path element like taxiway or runway, what is a callsign of an aircraft, and what is the condition to execute the taxi clearance. Since the ICAO standards specify many rules for ATC clearance phraseology, ATC controllers are trained to follow the ICAO standards to issue clearances to pilots. This improves the possibility to train the natural language processing method to understand the semantics of ATC clearances.

To make taxi operation safe and efficient, in some cases, an ATC controller may issue a taxi clearance including a condition, or the clearance is issued segmentally; for example: "UAS one two three, follow Airbus 320, right turn on taxiway November, hold short of Runway Two-Seven Left." The interpretation engine 414 can use an AI method such as a natural language processing algorithm to understand the semantics of this clearance. For this example, the semantics is that there is an Airbus 320 aircraft taxiing on the taxiway November from left to right; after the Airbus 320 passes the intersection, the ownship aircraft can start to turn right on the taxiway November and continue to taxi on the taxiway November behind the Airbus 320 aircraft by maintaining a safe distance; and stop in front of the hold short line before entering Runway 27L. The hold short line will be translated as a destination for this segment. In addition, "one Airbus 320 aircraft taxi on taxiway November from left to right and pass the intersection" will be interpreted as a condition to start the clearance for the ownship aircraft.

### Image Processing

The image processing module receives image input data from at least two optical sensors such as cameras installed on the aircraft. One of the optical sensors can be a look-forward camera, and the other optical sensor can be a look-down camera.

The look-down camera is mainly used to capture the markings, signs or any other symbols painted on a surface. The image processing module can use an object detection algorithm to process the look-down image to recognize the markings or signs. If the recognized markings or signs match up with the destination contained in the taxi clearance, the image processing module will mark the clearance as completed. Otherwise, the image processing module transmits the recognized markings or signs to the noncompliance detection module to further determine if there is any constraint based on the operation rules stored in the database.

There are unique markings and/or signs for the runway, parking stand, or holding position presented on the airport surface. Thus, the image processing module can use the object detection method to detect the markings and/or signs for the runway, parking stand, and/or hold short positions from the look-down images.

Figure 5 shows one example of typical runway markings at an airport. The designation markings are presented for different types of runways. The runway designator includes a number and/or letter. The letters differentiate between left (L), right (R), or center (C) parallel runways, with both number and letter typically presented in a white color.

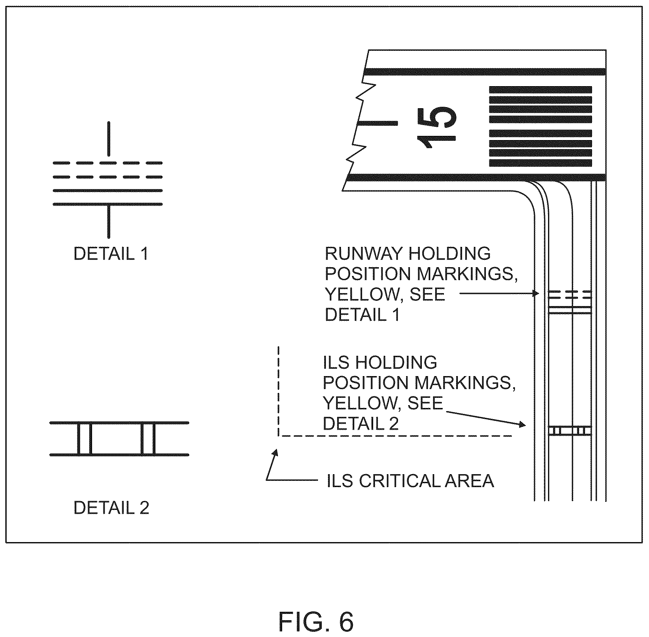

The holding position markings are painted on runways or taxiways to improve safe and efficient taxi operation on airport surfaces. The holding position markings indicate where an aircraft must stop when approaching a taxiway or runway. These typically include four yellow lines, with two solid and two dashed lines, which are spaced six or twelve inches apart, and extend across the width of the taxiway or runway. The solid lines are on the side where the aircraft must hold, as shown in Figure 6, which is an example of runway holding position markings on a taxiway at an airport.

The object detection algorithm can be trained by samples of pictures for holding position markings, runway markings, and parking position designation markings in advance. During a taxi operation, the image processing module can apply the object detection algorithm and the trained model to recognize the corresponding holding position markings, runway markings, and parking position designation markings presented on the airport surface from images captured by the look-down camera. The object detection algorithm can calculate the horizontal distance from aircraft nose to the holding lines based on the holding line location in the image and camera's field of view angle, installation parameters such as height above ground, tilt angle and offset from aircraft nose, and offset from the aircraft longitudinal axis, to make sure no part of the aircraft beyond the hold short line.

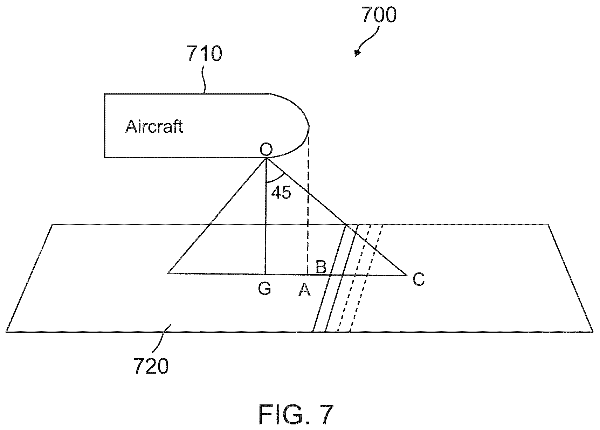

Figure 7 illustrates an example aircraft scenario 700 for an aircraft 710 with a look-down camera, showing how to calculate a distance from an aircraft nose to a holding line. As shown, the aircraft 710 has the look-down camera installed at a point O on its nose with zero tilt angle, and a point G is the projection of point O on an airport surface 720. Assuming a field of view of the look-down camera is 90 degrees, the half field of view angle is 45 degrees, as shown in Figure 7. The line O-G represents the height of the look-down camera installation above ground, and the line O-G is a known value from installation. The line G-C represents a half range of the camera's field of view coverage.

For example, assume line O-G is 10 meters, and based on the triangular geometry, the line G-C can be calculated as 10 meters as well. Also, assume a resolution of the installed camera is 1024*768 pixels. That means 512 pixels in the image represents 10 meters (G-C) in reality. The object detection algorithm can further know how much distance each pixel represents. The object detection algorithm can calculate actual distance of G-B based on pixels from the center of the image (represents point G) to point B. The point B represents the location of a hold short line in the image. The line G-A represents the offset from the aircraft nose to the camera installation point, which is a known value. Therefore, if G-A is less than G-B, the processor can know the aircraft is not beyond the hold short line.

The image processing module transmits the recognized markings, or signs to the noncompliance detection module to further determine if there are any operational constraints. For example, if the image processing module recognized that the aircraft is approaching a hold short line, it will transmit the hold short line to the noncompliance detection module, the noncompliance detection module will search the corresponding operation rule from the database, and the database will indicate that the corresponding rule is to stop in front of the hold short line. Then, the noncompliance detection module will further check the clearance database to determine if the authorization has been received; if not received, the noncompliance detection module will provide an alert to the flight crew to stop the aircraft to request an ATC clearance. If the authorization is not received but the aircraft is still moving forward, the noncompliance detection module will also issue an alert to the flight crew. If the image processing algorithm calculated that the aircraft nose has already passed the hold short line, the noncompliance detection module will issue an alert to the flight crew. One configuration file can be implemented to determine in what specific condition the alert can be issued to optimize the alerting strategy.

In case the ATC clearance includes a condition, which must be met before the aircraft can proceed, the system can leverage the look-forward camera to monitor if the condition is met or not. The look-forward camera can be installed and configured with two tilt angles to capture different ranges of field of view in the moving direction. One configuration for the look-forward camera can be for a far view with zero tilt angle for instance, and the other configuration for the look-forward camera can be for a near view with a tilt down angle.

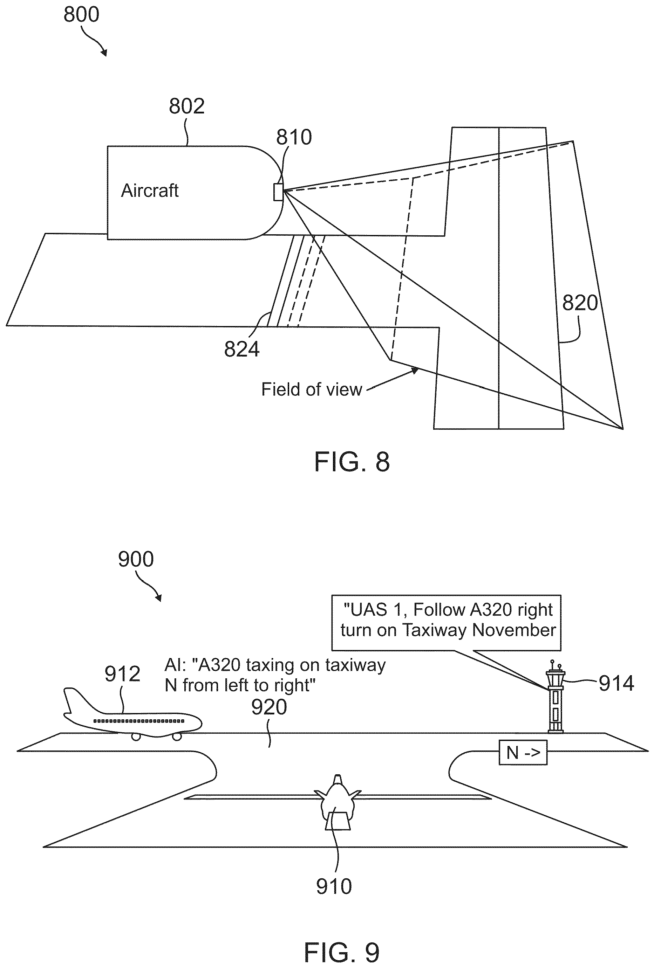

Figure 8 illustrates an example aircraft scenario 800 for an aircraft 802 with a look-forward camera 810 at a tilt down angle. The look-forward camera 810 can be installed to mainly focus on a nearest taxiway or runway 820 in a field of view when the aircraft 802 stops in front of a hold short line 824. This configuration can significantly eliminate information beyond the taxiway or runway 820 on the captured image. Since the distance from the hold short line 824 to the taxiway or runway 820 is defined in an industry standard, the tilt angle will depend on the camera installation position on the aircraft 802 and the aircraft type.

Figure 9 illustrates an example of a conditional clearance scenario 900, in which a UAS vehicle 910 is to hold in front of a taxiway November (N) in view of an aircraft 912. An ATC controller 914 issues a taxi clearance: "UAS 1, Follow A320 right turn on Taxiway November". An ATC clearance processing module uses an AI natural language processing method to understand the semantics of this clearance and decompose the semantics into a combination of several simple conditions as follows: one aircraft (912) is on taxiway November (N), the aircraft (912) is Airbus 320, and the Airbus 320 passes an intersection (920) from left to right (AI: "A320 taxiing on taxiway N from left to right"). The ATC clearance processing module then transmits the decomposed conditions to the image processing module.

The image processing module can use AI techniques, such as a vision transformer method and an object detection method, which are known to those skilled in the art, to interpret the image from the look-forward camera. For example, in a first step, the image processing module can use a vision transformer algorithm to determine if there is an aircraft on the taxiway. Since the look-forward camera is installed and configured to the tilt down angle to cover the nearest taxiway/runway, it eliminates more background information in the look-forward image and allows the vision transformer algorithm to track aircraft on the taxiway. When the vision transformer algorithm detects one aircraft on the taxiway, the image processing module can use the object detection algorithm to further detect if there is an aircraft.

It is known that each aircraft type has its own characteristics on appearance, such as shape of nose, wings or fuselage, and engine location relative to landing gear and/or wings, etc.; also, the airline logo or name, and aircraft tail number are typically painted on the aircraft fuselage. Such information is widely available on the Internet and can be used to train the object detection algorithm to classify the different parts such as wing, nose, rudder, engine, landing gear, fuselage, etc., for different aircraft types; and also, to classify airline logos, airline names, aircraft tail numbers, etc. By integration of the trained model, the object detection algorithm can recognize the target aircraft from the images captured by the look-forward camera based on the characteristics of the aircraft.

In a second step, the object detection algorithm can recognize a target aircraft based on the characteristics of its appearance. Once the object detection algorithm detects the target aircraft, the algorithm will continuously track the target aircraft in the following image frames to check if the target aircraft has passed the intersection by comparing the aircraft location relative to the taxiway in the image.

Alternatively, for the above image processing method, the first step and the second step can be swapped. That is, the image processing module can firstly detect if an aircraft is in the image by using the object detection algorithm, and secondly determine if the aircraft is on the taxiway using the vision transformer algorithm; and then further track the aircraft and determine if the aircraft has passed the intersection.

When the image processing module detects that a condition has been met, the image processing module signals the noncompliance detection module. In case the condition has not been met, but the ownship aircraft is detected as moving based on its speed and position change information, the noncompliance detection module will issue an alert to the flight crew.

The processing units and/or other computational devices used in the method and system described herein may be implemented using software, firmware, hardware, or appropriate combinations thereof. The processing unit and/or other computational devices may be supplemented by, or incorporated in, specially designed application-specific integrated circuits (ASICs) or field programmable gate arrays (FPGAs). In some implementations, the processing unit and/or other computational devices may communicate through an additional transceiver with other computing devices outside of the navigation system, such as those associated with a management system, or computing devices associated with other subsystems controlled by the management system. The processing unit and/or other computational devices can also include or function with software programs, firmware, or other computer readable instructions for carrying out various process tasks, calculations, and control functions used in the methods and systems described herein.

The methods described herein may be implemented by computer executable instructions, such as program modules or components, which are executed by at least one processor or processing unit. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer readable instructions. These instructions are typically stored on appropriate computer program products that include computer readable media used for storage of computer readable instructions or data structures. Such a computer readable medium may be available media that can be accessed by a general purpose or special purpose computer or processor, or any programmable logic device.

Suitable computer readable storage media may include, for example, nonvolatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

### Example Embodiments

Example 1 includes a system comprising: at least one controller onboard a vehicle, the at least one controller including a processor and a memory in operative communication with the processor; a set of optical sensors onboard the vehicle and in operative communication with the processor, the optical sensors including at least one look-forward optical sensor and at least one look-down optical sensor; and at least one bidirectional communication radio onboard the vehicle and in operative communication with the processor, the at least one bidirectional communication radio operative to receive air traffic control (ATC) clearance information; wherein the processor hosts a plurality of data processing modules, comprising: an ATC clearance processing module operative to receive the ATC clearance information from the at least one bidirectional communication radio, the ATC clearance processing module operative to translate the ATC clearance information into processor readable information; an image processing module operative to receive image data from the optical sensors, the image processing module configured to provide an object detection function and an image interpretation function; a noncompliance determination module in operative communication with the image processing module, the noncompliance determination module operative to produce an alert signal upon determining a noncompliance event; and an alert generation module configured to receive the alert signal from the noncompliance determination module, the alert generation module configured to output a visual alert or an audio alert; wherein the memory includes a database operative to store the translated ATC clearance information as commands, the database in operative communication with the noncompliance determination module.

Example 2 includes the system of Example 1, wherein the optical sensors include one or more visual light cameras, one or more infrared cameras, or combinations thereof.

Example 3 includes the system of any of Examples 1-2, wherein the at least one bidirectional communication radio comprises a very high frequency (VHF) radio, a high frequency (HF) radio, a satellite communications (SATCOM) radio, a 4G radio, or a 5G radio.

Example 4 includes the system of any of Examples 1-3, wherein the ATC clearance processing module is configured to host a voice recognition engine, and an interpretation engine in operative communication with the voice recognition engine.

Example 5 includes the system of Example 4, wherein the voice recognition engine is operative to receive and process a voice clearance message, via a voice channel of the at least one bidirectional communication radio; and the voice recognition engine is configured to convert the voice clearance message into a transcript clearance message that is sent to the interpretation engine for further processing.

Example 6 includes the system of any of Examples 4-5, wherein the interpretation engine is operative to receive and process a datalink clearance message, or a manually input clearance message; and the interpretation engine is configured to output processed clearance information to one or more clearance lists stored in the database.

Example 7 includes the system of any of Examples 4-6, wherein the interpretation engine comprises an artificial intelligence (AI) engine operative to perform natural language processing or regular expression, to understand semantics and extract information from transcript text related to the ATC clearance information.

Example 8 includes the system of any of Examples 1-7, wherein the object detection function and the image interpretation function are operative to process images from a look-forward camera and a look-down camera on the vehicle for object detection and interpretation.

Example 9 includes the system of any of Examples 1-7, wherein the image processing module is operative to use AI techniques, including a vision transformer algorithm and an object detection algorithm, to interpret images from a look-forward camera and a look-down camera on the vehicle.

Example 10 includes the system of any of Examples 1-9, further comprising one or more alert devices onboard the vehicle and operative to receive the visual alert or the audio alert.

Example 11 includes the system of Example 10, wherein the one or more alert devices include a visual alert device, an audio alert device, or combinations thereof.

Example 12 includes the system of any of Examples 1-11, wherein the vehicle comprises a crewed aircraft, or an uncrewed aircraft.

Example 13 includes a method comprising: (a) receiving an air traffic control (ATC) clearance message in an ATC clearance processing module onboard an ownship vehicle at an airport; (b) processing the ATC clearance message in the ATC clearance processing module to interpret semantics of the ATC clearance message and extract information; (c) obtaining a first incomplete clearance message for the ownship vehicle from an onboard clearance database for execution; (d) capturing an airport surface image or an environment image by one or more optical sensors onboard the ownship vehicle; and (e) determining if the ownship vehicle has arrived at a destination based on the airport surface image or the environment image; in response to determining that the ownship vehicle has arrived at the destination, marking the clearance message as completed, and repeating the method starting at step (a); in response to determining that the ownship vehicle has not arrived at the destination, determining if there is any operational condition or constraint; in response to determining that there is no operational condition nor constraint, repeating the method starting at step (d); in response to determining that there is an operational condition or constraint, determining whether the condition is met or authorization is received for the constraint; in response to determining that the condition is met, or authorization is received for the constraint, repeating the method starting at step (d); in response to determining that the condition is not met, or authorization is not received for the constraint, providing an alert to a pilot of the ownship vehicle, so the pilot can request a clearance before proceeding further.

Example 14 includes the method of Example 13, wherein the ATC clearance processing module has a voice recognition engine, and an interpretation engine in operative communication with the voice recognition engine; and the ATC clearance message is received in a voice format or a text format.

Example 15 includes the method of Example 14, wherein the voice recognition engine receives and processes the ATC clearance message in the voice format, via a voice channel of a bidirectional communication radio; and the voice recognition engine converts the ATC clearance message in the voice format into a transcript clearance message that is sent to the interpretation engine for further processing.

Example 16 includes the method of any of Examples 14-15, wherein the interpretation engine receives and processes the ATC clearance message in the text format via a datalink channel; and the interpretation engine outputs the processed ATC clearance message in the text format to one or more clearance lists stored in the clearance database.

Example 17 includes the method of any of Examples 14-15, wherein the interpretation engine comprises an artificial intelligence (AI) engine operative to perform natural language processing or regular expression, to understand the semantics of the ATC clearance message and to extract information from transcript text related to the ATC clearance message.

Example 18 includes the method of any of Examples 13-17, wherein the airport surface image or the environment image is processed in an image processing module that includes an object detection function and an image interpretation function.

Example 19 includes the method of Example 18, wherein the image processing module employs AI techniques, including a vision transformer algorithm and an object detection algorithm, to interpret the airport surface image or the environment image.

Example 20 includes the method of any of Examples 13-19, wherein the ownship vehicle comprises a crewed aircraft, or an uncrewed aircraft.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system comprising:
at least one controller onboard a vehicle, the at least one controller including a processor and a memory in operative communication with the processor;
a set of optical sensors onboard the vehicle and in operative communication with the processor, the optical sensors including at least one look-forward optical sensor and at least one look-down optical sensor; and
at least one bidirectional communication radio onboard the vehicle and in operative communication with the processor, the at least one bidirectional communication radio operative to receive air traffic control (ATC) clearance information;
wherein the processor hosts a plurality of data processing modules, comprising:
an ATC clearance processing module operative to receive the ATC clearance information from the at least one bidirectional communication radio, the ATC clearance processing module operative to translate the ATC clearance information into processor readable information;
an image processing module operative to receive image data from the optical sensors, the image processing module configured to provide an object detection function and an image interpretation function;
a noncompliance determination module in operative communication with the image processing module, the noncompliance determination module operative to produce an alert signal upon determining a noncompliance event; and
an alert generation module configured to receive the alert signal from the noncompliance determination module, the alert generation module configured to output a visual alert or an audio alert;
wherein the memory includes a database operative to store the translated ATC clearance information as commands, the database in operative communication with the noncompliance determination module.

2. The system of claim 1, wherein:
the optical sensors include one or more visual light cameras, one or more infrared cameras, or combinations thereof; and
the at least one bidirectional communication radio comprises a very high frequency (VHF) radio, a high frequency (HF) radio, a satellite communications (SATCOM) radio, a 4G radio, or a 5G radio.

3. The system of claim 1, wherein the ATC clearance processing module is configured to host a voice recognition engine, and an interpretation engine in operative communication with the voice recognition engine.

4. The system of claim 3, wherein:
the voice recognition engine is operative to receive and process a voice clearance message, via a voice channel of the at least one bidirectional communication radio;
the voice recognition engine is configured to convert the voice clearance message into a transcript clearance message that is sent to the interpretation engine for further processing;
the interpretation engine is operative to receive and process a datalink clearance message, or a manually input clearance message; and
the interpretation engine is configured to output processed clearance information to one or more clearance lists stored in the database.

5. The system of claim 4, wherein the interpretation engine comprises an artificial intelligence (AI) engine operative to perform natural language processing or regular expression, to understand semantics and extract information from transcript text related to the ATC clearance information.

6. The system of claim 1, wherein the object detection function and the image interpretation function are operative to process images from a look-forward camera and a look-down camera on the vehicle for object detection and interpretation.

7. The system of claim 1, wherein the image processing module is operative to use AI techniques, including a vision transformer algorithm and an object detection algorithm, to interpret images from a look-forward camera and a look-down camera on the vehicle.

8. The system of claim 1, further comprising one or more alert devices onboard the vehicle and operative to receive the visual alert or the audio alert.

9. The system of claim 1, wherein the vehicle comprises a crewed aircraft, or an uncrewed aircraft.

10. A method comprising:
(a) receiving an air traffic control (ATC) clearance message in an ATC clearance processing module onboard an ownship vehicle at an airport;
(b) processing the ATC clearance message in the ATC clearance processing module to interpret semantics of the ATC clearance message and extract information;
(c) obtaining a first incomplete clearance message for the ownship vehicle from an onboard clearance database for execution;
(d) capturing an airport surface image or an environment image by one or more optical sensors onboard the ownship vehicle; and
(e) determining if the ownship vehicle has arrived at a destination based on the airport surface image or the environment image;
in response to determining that the ownship vehicle has arrived at the destination, marking the clearance message as completed, and repeating the method starting at step (a);
in response to determining that the ownship vehicle has not arrived at the destination, determining if there is any operational condition or constraint;
in response to determining that there is no operational condition nor constraint, repeating the method starting at step (d);
in response to determining that there is an operational condition or constraint, determining whether the condition is met or authorization received for the constraint;
in response to determining that the condition is met, or authorization is received for the constraint, repeating the method starting at step (d);
in response to determining that the condition is not met, or authorization is not received for the constraint, providing an alert to a pilot of the ownship vehicle, so the pilot can request a clearance before proceeding further.
